Europäisches Patentamt

European Patent Office

Office européen des brevets

(11) Veröffentlichungsnummer: **0 301 095**
A1

## (12) EUROPÄISCHE PATENTANMELDUNG

veröffentlicht nach Art. 158 Abs. 3 EPÜ

(21) Anmeldenummer: 87906040.8

(22) Anmeldetag: 19.06.87

Daten der zugrundeliegenden inter-
nationalen Anmeldung:

(86) Internationale Anmeldenummer:
PCT/SU 87/00079

(87) Internationale Veröffentlichungsnummer:
WO 88/05708 (11.08.88 88/18)

(51) Int. Cl.⁴: **B 23 K 35/02**, B 23 K 35/06

(30) Priorität: 09.02.87 SU 4187001

(43) Veröffentlichungstag der Anmeldung: 01.02.89
Patentblatt 89/5

(84) Benannte Vertragsstaaten: AT BE DE FR GB IT SE

(71) Anmelder: INSTITUT ELEKTROSVARKI IMENI
E.O.PATONA AKADEMII NAUK UKRAINSKOI SSR, ul.
Bozhenko, 11, Kiev, 252650 (SU)

(71) Anmelder: MAGNITOGORSKY
GORNO-METALLURGICHESKY INSTITUT IMENI
G.I.NOSOVA, pr. Lenina, 38, Magnitogorsk, 455000 (SU)
Anmelder: ZAPOROZHSKY METIZNY ZAVOD IMENI
XXVI SIEZDA KPSS, Zaporozhie, 330600 (SU)

(72) Erfinder: PATON, Boris Evgenievich, ul.
Kostjubinskogo, 9-21, Kiev, 252000 (SU)
Erfinder: VOROPAI, Nikolai Markovich, ul.
Saljutnaya, 29a-25, Kiev, 252000 (SU)
Erfinder: NIKIFOROV, Boris Alexandrovich, ul.
Kuibysheva, 25-10, Magnitogorsk, 455018 (SU)
Erfinder: SCHEGOLEV, Georgy Alexandrovich, ul.
Oktyabrskaya, 11-20, Magnitogorsk, 455018 (SU)
Erfinder: LOGIIKO, Gennady Pavlovich, ul.
Zhdanova, 22-15, Magnitogorsk, 455000 (SU)
Erfinder: MISCHANIN, Vasily Grigorievich, ul.
Lermontova, 18-15, Zaporozhie, 330005 (SU)
Erfinder: ALIMOV, Anatoly Nikolaevich, ul. Krupskoi, 23,
Boyarka, 255510 (SU)

(74) Vertreter: Nix, Frank Arnold, Dr., Kröckelbergstrasse 15,
D-6200 Wiesbaden (DE)

(54) ELEKTRODENDRAHT.

(57) Die Erfindung bezieht sich auf das Gebiet der Schwei-
ßung.

Der Elektrodendraht besitzt zumindest einen in einem me-
tallischen Träger (1) ausgeführten längsverlaufenden Hohlraum
(3), der mit einem Gemenge (2) ausgefüllt ist. Der Hohlraum (3)
weist im Querschnitt eine schlitzartige Form auf, wobei das Ver-
hältnis der Breite zum Flächeninhalt in den Grenzen zwischen
0,005 und 0,5 liegt, während das Verhältnis des Flächeninhaltes
des Hohlraumes (3) zum Flächeninhalt des Drahtes im Quer-
schnitt in den Grenzen zwischen 0,05 und 0,5 liegt.

EP 0 301 095 A1

# ELEKTRODENDRAHT

## Technisches Gebiet

Die vorliegende Erfindung bezieht sich auf das Gebiet des Schweißens, insbesondere auf einen Elektrodendraht, der aus einem metallischen Träger und aus Gemengezusätzen besteht.

## Zugrundeliegender Stand der Technik

Zur Zeit ist die Lichtbogenschweißung in Schutzgasen (sowohl in oxydierenden als auch in inerten Gasen) mittels verzehrbarer Elektrode ein am stärksten verbreitetes Schweißverfahren in der Industrie. Im Bauwesen und auf Montageplätzen wird die Schweißung mittels verzehrbarer Elektrode ohne zusätzlichen Schutz weitgehend angewendet. Als verzehrbare Elektrode verwendet man hierbei Massivdrähte und Pulverdrähte. Der Massivdraht stellt einen gleichartigen monolithischen langen Metallstab dar, während der Pulverdraht ein Verbundwerkstoff ist, der aus einer dünnwandigen Hülle rohrförmigen oder komplizierteren Querschnitts und einem Gemenge besteht. Das Gemenge, das sich in dem durch die Pulverdrahthülle gebildeten Innenraum befindet, stellt ein mechanisches Gemisch von Metallpulvern (Eisenpulver, Ferrolegierungen, Legierungspulver) schlackenbildender und stabilisierender Komponenten dar. Das Verhältnis der Querschnittsfläche des mit dem Gemenge ausgefüllten Hohlraumes im Pulverdraht zur Querschnittsfläche des gesamten Drahtes beträgt in der Regel von 0,5 bis 0,8.

Beim Schweißen mittels Massivdrähten ist ein erhöhtes Verspritzen des Elektrodenmetalls und eine unbefriedigende Ausbildung von Schweißnähten zu verzeichnen. Mit den Massivdrähten ist es unmöglich, Schweißnähte mit hohen mechanischen Eigenschaften bei der ohne Schutzatmosphäre erfolgenden Schweißung von niedriggekohlten und niedriglegierten Stählen zu erhalten. Deshalb werden die Massivdrähte nur zur Schutzgas- oder Unterpulverschweißung verwendet.

Die Pulverdrähte bieten die Möglichkeit, Schweißnähte guter Qualität mit hohen mechanischen Eigenschaften sowohl bei der Schutzgas- und Unterpulverschweißung als auch ohne Schutzatmosphäre zu erhalten, jedoch haben sie zum Unterschied von den Massivdrähten einen hohen Preis, sind kompliziert in der Herstellung und verlangen beim Schweißen den Einsatz von speziellen Vorschubgeräten (mit mehreren Paaren Drahtvorschubrollen), welche einen geringen spezifischen Druck auf die Drahtoberfläche gewährleisten, weil die Steifigkeit des Drahtes, der in der Regel aus kaltgewalztem niedriggekohltem Stahl von 0,2 bis 0,5 mm Dicke ausgeführt ist, unzureichend ist. Metallpulver, die zur Zusammensetzung des Pulverdrahtes im Gemisch mit schlackenbildenden Komponenten gehören, sind der Korrosion ausgesetzt, was die Lagerfrist derartiger Drähte einschränkt, weshalb der Prozeß der Schweißung mittels des Pulverdrahtes aus der Sicht der Ausbildung von Schweißnähten hoher Qualität nicht zuverlässig genug ist.

Das Pulverdrahtgemenge leitet, trotzdem in ihm eine große Menge von metallischen Komponenten (Eisenpulver und Ferrolegierungen) anwesend ist, den elektrischen Strom nicht, und daher ist während des Schweißvorgangs ein bedeutendes Zurückbleiben der Aufschmelzung des Drahtkernes von der Abschmelzung der Metallhülle zu verzeichnen. Wegen unzureichender Erwärmung gehen dabei einzelne Gemengeteile ins Schweißbad ohne Aufschmelzen über, was die Effektivität des Schlackenschutzes der Tropfen des aufgeschmolzenen Metalls während des Wachstums derselben am Stirnende der Elektrode und der Übertragung ins Schweißbad herabsetzt , d.h., ein Teil der Schlacke nimmt am Schutz des geschmolzenen Gutes gegen Luft nicht teil. Aus diesem Grunde enthalten die Selbstschutz-Pulverdrähte im Gemenge 15 bis 20 Masse% schlackenbildende Schutzstoffe, was ihre kleinere Schweißleistung im Vergleich mit den Massivdrähten bedingt. Die Hauptursache für die ungleichmäßige Abschmelzung des Gemenges und des metallischen Trägers in den Pulverdrähten ist unzureichende Kontaktfläche des elektrisch nichtleitenden Gemenges mit dem metallischen Träger des Drahtes und niedrige Ausbreitungsgeschwindigkeit der Wärme im Gemengevolumen. Die unzureichend durchgewärmte geschmolzene Schlacke weist eine hohe Viskosität auf und zerfließt schlecht an der Oberfläche der Tropfen des Elektrodenmetalls, wodurch sich eben der wenig effektive Schlackenschutz des aufgeschmolzenen Metalls erklärt.

Der Elektrodendraht, der aus einem metallischen Trä-
ger und einem in Längskanälen dieses Trägers befindlichen
Gemenge entsprechender Zusammensetzung besteht, gewährleistet zum Unterschied von den Massivdrähten ein minimales Verspritzen und eine ausgezeichnete Formung von Schweißnähten und sichert im Unterschied zu den Pulverdrähten
eine hohe Schweißleistung, ist nicht teuer, weist eine
hinreichende Steifigkeit auf und bedarf keines Einsatzes
von speziellen Mehrrollen-Vorschubgeräten, wobei die Komponenten des Gemenges eines solchen Drahtes keiner Korrosion ausgesetzt sind. Der beste bekannte Draht dieser
Konstruktion ist ein Elektrodendraht, der aus einem metallischen Träger und einem Gemenge besteht und bei dem
im metallischen Träger im wesentlichen längs der Erzeugenden Hohlräume ausgeführt sind, die auf die Drahtoberfläche hinausgehen und von denen jeder im Querschnitt
eine geometrische Figur darstellt, welche sich in Richtung
der Mantelfläche des Drahtes verjüngt (GB, A, 1481140).
Die Erwärmung des metallischen Trägers vor dem Aufschmelzen erfolgt hier durch den durchgehenden elektrischen
Strom auf der freien Elektrodenlänge und durch die Wärmeübertragung vom aktiven Lichtbogenfleck aus, der sich am
Stirnende des abschmelzenden Elektrodendrahtes befindet.
Jedoch ist bei der Schweißung mittels des Drahtes der
bekannten Konstruktion ebenfalls ein beträchtliches Zurückbleiben der Abschmelzung des Gemenges gegenüber dem metalli-
schen Träger wegen einer unzureichenden Kontaktfläche des
Gemenges mit dem metallischen Träger zu verzeichnen.
Bei einem Gehalt des Gemenges von weniger als 15 Masse%
schlackenbildender Stoffe kann mittels dieses Drahtes
kein effektiver Schutz des aufgeschmolzenen Metalls
der Tropfen gegen Luft gewährleistet werden, und
außerdem bilden sich in den Schweißnähten Poren. Die
mit dem Gemenge ausgefüllten Hohlräume gehen beim Draht
dieser Konstruktion auf die Oberfläche hinaus, weshalb die
Möglichkeit eines teilweisen Ausbröckelns des Gemenges aus den Kanälen bei Biegungen des Drahtes und beim Durchlauf desselben durch die Rollen des Vorschubgerätes nicht ausgeschlossen ist.

Nach dem technischen Wesen kommt der erfindungsgemäßen Lösung die Konstruktion eines Elektrodendrahtes am nächsten, der mit mindestens einem längsverlaufenden Hohlraum ausgeführt ist, welcher mit einem Gemenge ausgefüllt ist und im Querschnitt eine gedehnte  , Konfiguration aufweist (GB, A, 686120). Die Konstruktion des bekannten Drahtes besitzt im Querschnitt symmetrische Hohlräume, die vom Zentrum zur Außenfläche des Drahts gerichtet sind. Die Breite der Hohlräume im Drahtquerschnitt nimmt in Richtung vom Zentrum aus zur Außenfläche des Drahtes zu. Der Draht enthält 6 Masse% oder weniger Gemenge, das sich in den Hohlräumen befindet.

Der Draht einer solchen Konstruktion gewährleistet eine Schweißleistung gleich oder sogar höher als die Massivdrähte beim Fehlen von Spritzern und bei guter Ausbildung von Schweißnähten. Jedoch beseitigt dieser Draht das Zurückbleiben der Abschmelzung des Gemenges hinter der Abschmelzung des metallischen Trägers wegen einer geringen Kontaktfläche des elektrisch nichtleitenden Gemenges mit dem metallischen Träger und einer niedrigen Geschwindigkeit der Wärmeübertragung von der Oberfläche des Hohlraumes aus in die Tiefe des Gemenges nicht und gewährleistet keinen hinreichend effektiven Schlackenschutz der aufgeschmolzenen Tropfen des Elektrodenmetalls gegen Luft, welcher durch unvollständiges Abschmelzen des Gemenges und Übergang eines Teils der schlakenbildenden Komponenten in das Schweißbad in Form von nicht aufgeschmolzenen Teilchen bedingt ist, die daher an der Bildung eines Schlackenschutzfilmes an der Oberfläche der Elektrodentropfen nicht teilnehmen.

Offenbarung der Erfindung

Der vorliegenden Erfindung liegt die Aufgabe zugrunde, eine solche Drahtkonstruktion zu schaffen, die ein gleichzeitiges Abschmelzen des metallischen Trägers und des in Längsräumen befindlichen elektrisch nichtleitenden Gemenges sicherstellen sowie die Wirksamkeit des

Schlackenschutzes sowie der geschmolzenen Metalltropfen während ihres Wachsens an der Stirnfläche der Elektrode und während ihres Übertragens ins Schweißbad erhöhen würde.

Die gestellte Aufgabe wird dadurch gelöst, daß im Elektrodendraht, der aus einem metallischen Träger und einem Gemenge besteht und zumindest mit einem Hohlraum ausgeführt ist, welcher mit dem Gemenge ausgefüllt ist und im Querschnitt eine gedehnte Konfiguration aufweist, erfindungsgemäß jeder längsverlaufende Hohlraum in seinem Querschnitt eine schlitzartige Form hat, wobei das Verhältnis der Breite des Hohlraumes im Querschnitt zum Flächeninhalt desselben in den Grenzen im wesentlichen zwischen 0,005 und 0,5 liegt, während das Verhältnis der Querschnittsfläche des Hohlraumes oder der Gesamtfläche der Querschnitte von Hohlräumen zur Querschnittsfläche des Drahtes in den Grenzen im wesentlichen zwischen 0,05 und 0,5 liegt.

Der Hauptvorteil des Drahtes dieser Konstruktion ist, daß bei der Ausführung des Hohlraumes in Form eines engen Schlitzes, bei dem das Verhältnis der Querschnittsbreite zu Querschnittsfläche in den Grenzen von 0,005 bis 0,5 liegt, solch eine Kontaktfläche des elektrisch nichtleitenden Gemenges mit dem metallischen Träger und eine Wärmeübertragung vom Metall zum Gemenge sichergestellt werden, daß das Gemenge während des Schweißvorgangs dazu kommt, sich auf der ganzen Breite des Hohlraumes auf die Schmelztemperatur zu erwärmen. Dank der ausreichenden Durchwärmung des Gemenges auf der ganzen Hohlraumbreite und der gleichzeitigen Abschmelzung desselben mit dem metallischen Träger besitzt die geschmolzene Schlacke an der Oberfläche der Metalltropfen, welche sich beim Schweißen am Stirnende der Elektrode ausbilden, eine bessere Deckfähigkeit und folglich bessere Schutzeigenschaften, weil sie eine etwas kleinere Viskosität aufgrund der Erwärmung auf eine höhere Temperatur aufweist. Darüber hinaus ist bei der gleichzeitigen Abschmelzung des metallischen Trägers und des Gemenges des Elektrodendrahtes das gesamte Gemengevolumen an der Bildung des Schlackenfilmes an der Tropfenoberfläche beteiligt. Die Effektivität des Schlackenschutzes nimmt dabei wesentlich zu. Die untere Grenze des Verhältnisses der Dicke zum Flächeninhalt des Hohlraumes im Querschnitt, welche 0,005 gleich ist, ist durch die Korngrößenzusammensetzung der Gemengekomponenten bedingt, deren Korngrößen im vorliegenden Fall mit der Schlitzbreite kommensurabel sind. Es ist hierbei nicht möglich, eine gleichmäßige Verteilung und eine gemeinsame Abschmelzung verschiedener Gemengekomponenten im Hohlraumvolumen bei einem Verhältnis der Breite des Hohlraumes zum Flächeninhalt im Querschnitt desselben unter 0,005 zu erzielen, was bedeutet, daß ein Draht mit guten schweißtechnologischen Charakteristiken unmöglich zu erhalten ist. Die Ausführung des Schlitzes mit dem Verhältnis der Breite zum Flächeninhalt im Querschnitt desselben über 0,5 übt keinen wesentlichen Einfluß auf die Gleichmäßigkeit der Abschmelzung des Gemenges und des metallischen Trägers aus und gewährleistet infolgedessen keine Verbesserung des Schlackenschutzes des Metalls im Vergleich mit bekannten technischen Lösungen.

Das Verhältnis des Flächeninhaltes des Hohlraums oder der Gesamtfläche der Querschnitte von Hohlräumen zur Querschnittsfläche des Drahtes soll 0,05 nicht unterschreiten, weil in diesem Fall die positive Einwirkung des Gemenges auf die Effektivität des Schlackenschutzes des aufgeschmolzenen Metalls der Elektrodentropfen wenig wahrnehmbar ist, die Brennstabilität des Lichtbogens verschlechtert sich sprunghaft, während das Verspritzen zunimmt. Eine Vergrößerung des Flächeninhalts des Hohlraumes oder der Gesamtfläche der Querschnitte von Hohlräumen im Drahtquerschnitt über 0,5 vom Flächeninhalt des ganzen Drahtes gewährleistet keine hinreichende Abschmelzleistung des Elektrodendrahtes, weil ein beträchtlicher Teil der Energie, die für das Abschmelzen des Drahtes aufgewandt wird, für die Erwärmung und Abschmelzung des Gemenges verbraucht wird, welches keine Schweißnaht bildet, sondern lediglich eine Hilfsfunktion - den Schutz des Metalls vor Luft - erfüllt. Mit anderen Worten geht in diesem Fall der Wirkungsgrad des Schweißvorgangs zurück.

Hierbei ist es zweckmäßig, daß jeder längsverlaufende Hohlraum im Draht so gelegen ist, daß von 0,03 bis 1 der Querschnittsfläche des Hohlraumes sich in einem Abstand von höchstens 0,3 des Durchmessers des Drahtes von dessen Oberfläche befindet. Dies trägt zur Verbesserung der Wärmeübertragung zum Gemenge bei, gewährleistet eine gleichmäßigere Abschmelzung des Gemenges mit dem metallischen Träger, was letzten Endes die Effektivität des Schlackenschutzes des Metalls erhöht. Im Abstand von 0,3 des Durchmessers von der Drahtoberfläche liegt 50 % des Gemengevolumens, weshalb die bevorzugte Anordnung des Gemenges in diesem Volumen einerseits den physikalischen Schutz des Volumens des abschmelzenden metallischen Trägers des Elektrodendrahtes gewährleistet, welcher sich im zentralen Teil des Drahtquerschnitts befindet. Andererseits sind wegen der Zuführung des elektrischen Stromes über die Drahtoberfläche infolge einer zusätzlichen Wärmeentwicklung im Kontakt "Stromzuführungsdüse - Draht" die peripheren Bereiche des metallischen Trägers des Drahtes im Querschnitt desselben auf eine höhere Temperatur erwärmt als dessen zentraler Teil. Die Beschränkung eines Teils des Flächeninhaltes der Hohlräume im peripheren Bereich des Drahtes auf die Größe 0,3 ist durch die Koagulationsgeschwindigkeit der Schlacke im Volumen des schmelzflüssigen Tropfens am Stirnende der Elektrode, durch Aufschwimmen der Schlacke auf die Tropfenoberfläche und Zerfließen des Schlackenfilms an der Tropfenoberfläche bedingt. Wenn weniger als 0,3 des Flächeninhaltes der Hohlräume im Drahtquerschnitt in einem Abstand bis 0,3 des Durchmessers des Drahtes von dessen Oberfläche liegt, erweist sich die Effektivität des Schlackenschutzes während des Wachstums des Tropfens am Stirnende der Elektrode als unzureichend, d.h., während der Zeit, die bis zur Bildung des Schlackenfilmes ausreichender Dicke an der Oberfläche des Tropfens des Elektrodenmetalls verläuft, kommt das aufgeschmolzene Metall der Elektrode dazu, sich mit schädlichen Gasen (Sauerstoff, Wasserstoff, Stickstoff) aus der Atmosphäre der Schmelzzone
über die beim Schweißen zulässigen Grenzen hinaus zu
sättigen. Außerdem entstehen bei der Verringerung des Anteils des Flächeninhalts der Hohlräume an der Peripherie
des Drahtquerschnitts unter 0,3 erhebliche technologische
Schwierigkeiten bei der Herstellung eines Drahtes mit
Hohlräumen in Form von engen profilierten Schlitzen, welche im begrenzten zentralen Bereich des Drahtes untergebracht werden müssen.

Es ist wünschenswert, daß die Breite jedes Hohlraumes
in dessen Querschnitt eine veränderliche Größe darstellt,
weil dabei der Flächeninhalt der Wärmeübertragung von dem
metallischen Träger zum Gemenge zusätzlich vergrößert und
dadurch die Zuverlässigkeit des Schlackenschutzes des aufgeschmolzenen Metalls erhöht wird.

Kurze Beschreibung der Zeichnungen

Im folgenden wird die vorliegende Erfindung durch eingehende Beschreibung eines konkreten Ausführungsbeispiels
derselben unter Hinweisen auf beigefügte Zeichnungen erläutert, in diesen zeigen:

Fig. 1 einen Draht mit einem Hohlraum, der einen engen
profilierten Schlitz veränderlicher Breite darstellt, gemäß der Erfindung, im Querschnitt;

Fig. 2 einen Draht mit einem Hohlraum, der einen profilierten Schlitz geknickter Form darstellt, gemäß
der Erfindung, im Querschnitt;

Fig. 3 einen Draht mit zwei symmetrischen Hohlräumen,
die enge profilierte Schlitze veränderlicher Breite darstellen, welche im peripheren Teil des Drahtes untergebracht sind, gemäß der Erfindung, im Querschnitt;

Fig. 4 desgl., eine andere Ausführungsvariante des Drahtes mit zwei symmetrischen Hohlräumen, gemäß der Erfindung,
im Querschnitt;

Fig. 5 einen Draht mit einem Hohlraum, der einen engen profilierten Schlitz kreuzartiger Form darstellt, gemäß der Erfindung, im Querschnitt;

Fig. 6 einen Draht mit einem Hohlraum, der einen engen profilierten Schlitz in Dreiblättchen-Form, gemäß der Erfindung, im Querschnitt;

Fig. 7 einen Draht mit einem Hohlraum, der einen profilierten Schlitz kreuzartiger Form darstellt, bei welchem die Gipfel des Kreuzes an der Drahtoberfläche Segmente bilden, gemäß der Erfindung, im Querschnitt;

Fig. 8 einen Draht mit vier Hohlräumen, die profilierte Schlitze als Teil eines Ringes darstellen, gemäß der Erfindung, im Querschnitt;

Fig. 9 desgl., eine Ausführungsvariante des Drahtes mit drei Hohlräumen, gemäß der Erfindung, im Querschnitt;

Fig. 10 einen Draht mit einem Hohlraum, der einen profilierten Schlitz des Doppel-T-Profils darstellt, gemäß der Erfindung, im Querschnitt;

Fig. 11 einen Draht mit vier Hohlräumen, die profilierte Schlitze V-förmigen Profils darstellen, gemäß der Erfindung, im Querschnitt;

Fig. 12 einen Draht mit zwei Hohlräumen, die profilierte Schlitze als Teil eines Ringes darstellen, gemäß der Erfindung, im Querschnitt.

Beste Ausführungsform der Erfindung

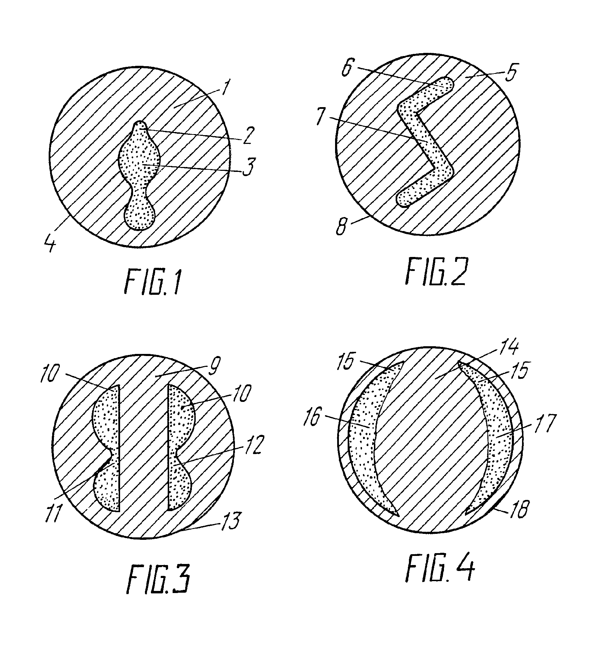

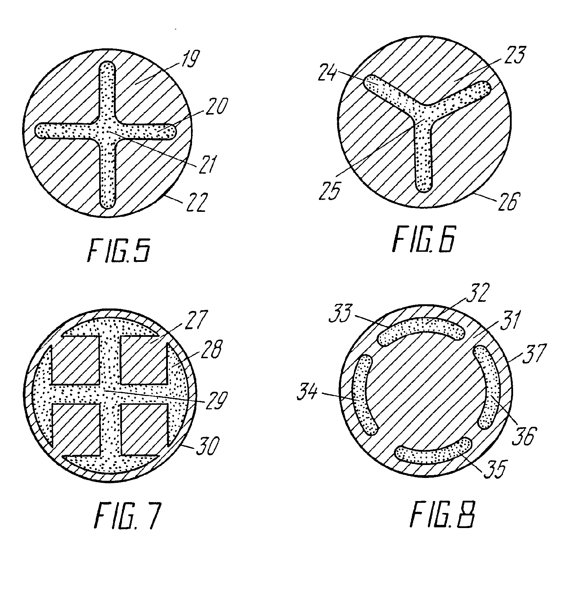

Der Elektrodendraht, dessen Querschnittsvarianten in Fig. 1 - 12 gezeigt sind, besteht aus einem metallischen Träger und einem Gemenge und ist zumindest mit einem längsverlaufenden Hohlraum versehen, welcher mit dem Gemenge ausgefüllt ist und eine gedehnte Konfiguration im Querschnitt aufweist. Gemäß der Erfindung ist der Hohlraum des Drahtes im Querschnitt schlitzförmig ausgebildet, wobei das Verhältnis der Querschnittsbreite zur Querschnittsfläche in den Grenzen im wesentlichen zwischen 0,005 und 0,5 liegt, während das Verhältnis der Querschnittsfläche des Hohlraumes zur Querschnittsfläche des Drahtes in den Grenzen im wesentlichen zwischen 0,05 und 0,5 liegt. Hierbei ist jeder längsverlaufende Hohlraum im Draht so gelegen, daß sich von 0,3 bis 1 der Querschnittsfläche des Hohlraums in einem Abstand von höchstens 0,3 des Durchmessers des Drahtes von dessen Oberfläche befindet. Die Breite des Hohlraumes in dessen Querschnitt ist eine veränderliche Größe. Der metallische Träger des Drahtes enthält Desoxydationsmittel, während das Gemenge stabilisierende und schlackenbildende Komponenten enthält.

Der in Fig. 1 dargestellte Elektrodendraht besteht aus einem metallischen Träger 1 und einem Gemenge 2, das sich in einem längsverlaufenden Hohlraum 3 befindet, welcher im Querschnitt eine entwickelte Konfiguration aufweist. Gemäß der Erfindung stellt der Hohlraum 3 im Querschnitt einen engen profilierten Schlitz veränderlicher Breite dar, bei dem das Verhältnis der Breite des Hohlraumes zu dessen Flächeninhalt im Querschnitt in den Grenzen zwischen 0,016 und 0,5 liegt, das Verhältnis des Flächeninhalts des Hohlraumes zum Flächeninhalt des Drahtes in dessen Querschnitt gleich 0,10 ist und der Anteil des Flächeninhalts des Hohlraumes im Querschnitt, welcher Anteil in einem Abstand bis zu 0,3 des Durchmessers von der Drahtoberfläche 4 liegt, 0,35 beträgt. Der metallische Träger des Drahtes besteht aus einem Stahl, der Desoxydationsmittel (Silizium und Mangan) enthält, während das Gemenge stabilisierende Komponenten (Potasche, kalzinierte Soda) und schlackenbildende Komponenten (Rutilkonzentrat, Fluorit, Magnesit) enthält.

Der in Fig. 2 dargestellte Elektrodendraht besteht aus einem metallischen Träger 5 und einem Gemenge 6, das sich in einem längsverlaufenden Hohlraum 7 befindet, welcher im Querschnitt eine gedehnte Konfiguration aufweist. Gemäß der Erfindung stellt der Hohlraum 7 im Querschnitt einen engen profilierten Schlitz geknickter Form dar, bei dem das Verhältnis der Breite des Hohlraumes zu dessen Flächeninhalt im Querschnitt 0,02 beträgt, das Verhältnis des Flächeninhalts des Hohlraumes zum Flächeninhalt des Drahtes in dessen Querschnitt gleich 0,11 ist und der Anteil des Flächeninhalts des Hohlraumes im Querschnitt, welcher Anteil in einem Abstand bis zu 0,3 von der Drahtoberfläche 8 liegt, 0,3 beträgt. Der metallische Träger des Drahtes besteht aus einem Stahl, der Desoxydations-

mittel (Silizium, Mangan, Aluminium) enthält, während das Gemenge stabilisierende Komponenten (Pottasche, Kalium-Natrium-Silikat) und schlackenbildende Komponenten (Rutilkonzentrat, Quarzsand, Perowskit) enthält.

Der in Fig. 3 dargestellte Elektrodendraht besteht aus einem metallischen Träger 9 und einem Gemenge 10, das sich in zwei längsverlaufenden Hohlräumen 11 und 12 befindet, welche im Querschnitt eine gedehnte Konfiguration aufweisen. Gemäß der Erfindung stellen die Hohlräume 11 und 12 im Querschnitt enge profilierte Schlitze veränderlicher Breite dar, bei denen das Verhältnis der Breite jedes Hohlraumes zu dessen Flächeninhalt im Querschnitt 0,008 - 0,12 beträgt, das Verhältnis des Flächeninhalts des Hohlraumes zum Flächeninhalt des Drahtes in dessen Querschnitt gleich 0,05 ist und der Anteil des Flächeninhalts des Hohlraumes im Querschnitt, welcher Anteil in einem Abstand bis zu 0,3 des Durchmessers von der Drahtoberfläche 13 liegt, 0,3 beträgt. Der metallische Träger des Drahtes besteht aus einem Stahl, der Desoxydationsmittel (Mangan, Titan) enthält, während das Gemenge stabilisierende Komponenten (Kalium-Natrium-Silikat, Zäsiumkarbonat) und schlackenbildende Komponenten (Quarzsand, Feldspat, Kryolith, Fluorit) enthält.

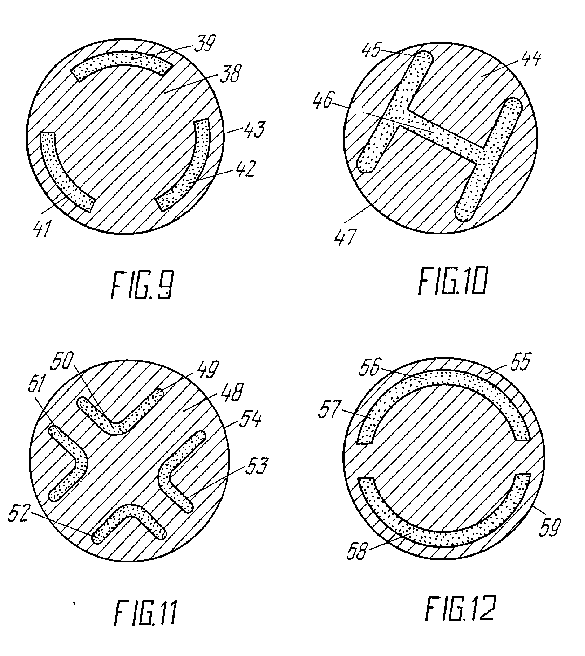

Der in Fig. 4 dargestellte Elektrodendraht besteht aus einem metallischen Träger 14 und einem Gemenge 15, das sich in zwei längsverlaufenden Hohlräumen 16 und 17 befindet, welche im Querschnitt eine gedehnte Konfiguration aufweisen. Gemäß der Erfindung stellen die Hohlräume 16 und 17 im Querschnitt enge profilierte sichelförmige Schlitze veränderlicher Breite dar, bei denen das Verhältnis der Breite jedes Hohlraumes zu dessen Flächeninhalt 0,005 - 0,15 beträgt, das Verhältnis des Flächeninhalts des Hohlraumes zum Flächeninhalt des Drahtes in dessen Querschnitt gleich 0,11 ist und der Anteil des Flächeninhalts des Hohlraumes im Querschnitt, welcher Anteil in einem Abstand bis zu 0,3 des Durchmessers von der Drahtoberfläche 18 liegt, 1 beträgt. Der metallische Träger des Drahtes besteht aus einem Stahl, der ein Desoxydationsmittel (Mangan) enthält, während das Gemenge eine stabilisierende Komponente (kalzinierte Soda) und schlackenbildende Komponenten (Fluorit, Tonerde, Feldspat) enthält.

Der in Fig. 5 dargestellte Elektrodendraht besteht aus einem metallischen Träger 19 und einem Gemenge 20, das sich in einem längsverlaufenden Hohlraum 21 befindet, welcher im Querschnitt eine gedehnte Konfiguration aufweist. Gemäß der Erfindung stellt der Hohlraum 21 im Querschnitt einen engen profilierten kreuzförmigen Schlitz dar, bei welchem das Verhältnis der Breite des Hohlraumes zu dessen Flächeninhalt im Querschnitt 0,014 beträgt, das Verhältnis des Flächeninhalts des Hohlraumes zum Flächeninhalt des Drahtes in dessen Querschnitt gleich 0,15 ist und der Anteil des Flächeninhalts des Hohlraumes im Querschnitt, welcher Anteil in einem Abstand bis zu 0,3 des Durchmessers von der Drahtoberfläche 22 liegt, 0,4 beträgt. Der metallische Träger des Drahtes besteht aus einem Stahl, der Desoxydationsmittel (Silizium und Mangan) enthält, während das Gemenge eine stabilisierende Komponente (Natrium-Kalium-Silikat) und schlackenbildende Komponenten (Rutil, Kryolith, Feldspat, Natriumhexafluorosilikat) enthält.

Der in Fig. 6 dargestellte Elektrodendraht besteht aus einem metallischen Träger 23 und einem Gemenge 24, das sich in einem längsverlaufenden Hohlraum 25 befindet, welcher im Querschnitt eine gedehnte Konfiguration aufweist. Gemäß der Erfindung stellt der Hohlraum im Querschnitt einen engen profilierten Schlitz in Dreiblättchen-Form dar, bei dem das Verhältnis der Breite des Hohlraumes zu dessen Flächeninhalt im Querschnitt 0,018 beträgt, das Verhältnis des Flächeninhalts des Hohlraumes zum Flächeninhalt des Drahtes in dessen Querschnitt gleich 0,12 ist und der Anteil des Flächeninhalts des Hohlraumes im Querschnitt, welcher Anteil in einem Abstand bis zu 0,3 des Durchmessers von der Drahtoberfläche 26 liegt, 0,4 beträgt. Der metallische Träger des Drahtes besteht aus einem Stahl, der Desoxydationsmittel (Silizium, Mangan, Titan, Vanadin, Aluminium) enthält, während das Gemenge eine stabilisierende Komponente (Zäsiumchromat) und schlakkenbildende Komponenten (Marmor, Perowskit, Wollastonik, Natriumhexafluorosilikat) enthält.

Der in Fig. 7 dargestellte Elektrodendraht besteht aus einem metallischen Träger 27 und einem Gemenge 28, das sich in einem längsverlaufenden Hohlraum 29 befindet, welcher im Querschnitt eine gedehnte Konfiguration aufweist. Gemäß der Erfindung stellt der Hohlraum im Querschnitt einen engen profilierten kreuzförmigen Schlitz dar, bei dem die Gipfel des Kreuzes an der Drahtoberfläche 30 segmentale Hohlräume bilden. Das Verhältnis der Breite des Hohlraumes zu dessen Flächeninhalt im Querschnitt beträgt 0,02, das Verhältnis des Flächeninhalts des Hohlraumes zum Flächeninhalt des Drahtes in dessen Querschnitt ist gleich 0,5 und der Anteil des Flächeninhalts des Hohlraumes im Querschnitt, welcher Anteil in einem Abstand bis zu 0,3 des Durchmessers von der Drahtoberfläche 30 liegt, 0,7 beträgt. Der metallische Träger des Drahtes besteht aus einem Stahl, der Desoxydationsmittel (Mangan, Aluminium, Kalzium) enthält, während das Gemenge eine stabilisierende Komponente (Natriumkarbonat) und schlackenbildende Komponenten (Magnesit, Rutil, Feldspat, Tonerde) enthält.

Der in Fig. 8 dargestellte Elektrodendraht besteht aus einem metallischen Träger 31 und einem Gemenge 32, das sich in vier symmetrischen Hohlräumen 33, 34, 35 und 36 befindet. Gemäß der Erfindung stellt jeder Hohlraum im Querschnitt einen engen profilierten Schlitz dar, dessen Form der Teil eines Ringes ist, für welchen das Verhältnis der Breite des Hohlraumes zur Gesamtfläche der Hohlräume im Drahtquerschnitt 0,05 beträgt, das Verhältnis des Flächeninhalts der Hohlräume zum Flächeninhalt des Drahtes in dessen Querschnitt gleich 0,17 ist und der Anteil des Flächeninhalts der Hohlräume im Querschnitt, welcher Anteil in einem Abstand bis zu 0,3 des Durchmessers von der Drahtoberfläche 37 liegt, 1 beträgt. Der metallische Träger des Drahtes besteht aus einem Stahl, der Desoxydationsmittel (Mangan, Silizium, Zer, Lanthan) enthält, während

- 14 -                    00301095

das Gemenge stabilisierende Komponenten (Zäsiumdichromat, Rubidiumnitrat) und schlackenbildende Komponenten (Magnesit, Feldspat, Manganerz, Ilmenitkonzentrat) enthält.

Der in Fig. 9 dargestellte Elektrodendraht besteht aus einem metallischen Träger 38 und einem Gemenge 39, das sich in Hohlräumen 40, 41, 42 befindet. Gemäß der Erfindung stellt jeder Hohlraum im Querschnitt einen engen profilierten Schlitz dar, dessen Form ebenso wie in Fig. 8 der Teil eines Ringes ist, für welchen das Verhältnis der Breite des Hohlraumes zur Gesamtfläche der Hohlräume im Drahtquerschnitt 0,06 beträgt, das Verhältnis des Flächeninhalts der Hohlräume zum Flächeninhalt des Drahtes in dessen Querschnitt gleich 0,09 ist und der Anteil des Flächeninhalts der Hohlräume im Querschnitt, welcher Anteil in einem Abstand bis zu 0,3 des Durchmessers von der Drahtoberfläche 43 liegt, 1 beträgt. Der metallische Träger des Drahtes besteht aus einem Stahl, der Desoxydationsmittel (Kohlenstoff, Silizium, Mangan, Kalzium, Barium) enthält, während das Gemenge stabilisierende Komponenten (Zäsiumkarbonat und Kaliumkarbonat) und schlackenbildende Komponenten (Rutil, Fluorit, Magnesit, Feldspat) enthält.

Der in Fig. 10 dargestellte Elektrodendraht besteht aus einem metallischen Träger 44 und einem Gemenge 45, das sich in einem Hohlraum 46 befindet, welcher im Querschnitt eine gedehnte Konfiguration aufweist. Gemäß der Erfindung stellt der Hohlraum im Querschnitt einen engen profilierten Schlitz des Doppel-T-Profils dar, bei dem das Verhältnis der Breite des Hohlraumes zu dessen Flächeninhalt im Querschnitt 0,01 beträgt, das Verhältnis des Flächeninhalts des Hohlraumes zum Flächeninhalt des Drahtes in dessen Querschnitt gleich 0,18 ist und der Anteil des Flächeninhalts des Hohlraumes im Querschnitt, welcher Anteil in einem Abstand bis zu 0,3 des Durchmessers von der Drahtoberfläche 47 liegt, 0,8 beträgt. Der metallische Träger des Drahtes besteht aus einem Stahl, der Desoxydationsmittel (Kohlenstoff, Mangan, Aluminium, Kalzium) enthält, während das Gemenge stabilisierende Komponenten (Kaliumkarbonat und Natriumkarbonat) und schlackenbildende Komponenten (Marmor, Perowskit, Wollastonit, Kryolith, Tonerde) enthält.

Der in Fig. 11 dargestellte Elektrodendraht besteht aus einem metallischen Träger 48 und einem Gemenge 49, das sich in vier Hohlräumen 50, 51, 52 und 53 befindet, welche im Querschnitt eine gedehnte Konfiguration aufweisen. Gemäß der Erfindung stellen die Hohlräume im Querschnitt enge profilierte Schlitze V-förmigen Profils dar, bei denen das Verhältnis der Breite des Hohlraumes zu dessen Flächeninhalt im Drahtquerschnitt 0,032 beträgt, das Verhältnis des Flächeninhaltes des Hohlraumes zum Flächeninhalt des Drahtes in dessen Querschnitt gleich 0,17 ist und der Anteil des Flächeninhaltes des Hohlraumes im Querschnitt, welcher Anteil in einem Abstand bis zu 0,3 des Durchmessers von der Drahtoberfläche 54 liegt, 0,32 beträgt. Der metallische Träger des Drahtes besteht aus einem Stahl, der Desoxydationsmittel (Kohlenstoff, Silizium, Mangan, Titan, Aluminium, Zirkonium) enthält, während das Gemenge eine stabilisierende Komponente (Kalium-Natrium-Silikat) und schlackenbildende Komponenten (Marmor, Perowskit, Fluorit, Kryolith) enthält.

Der in Fig. 12 dargestellte Elektrodendraht besteht aus einem metallischen Träger 55 und einem Gemenge 56, das sich in zwei Hohlräumen 57 und 58 befindet, welche im Querschnitt eine gedehnte Konfiguration aufweisen. Gemäß der Erfindung stellt der Hohlraum im Querschnitt einen engen profilierten Schlitz in Form eines Halbringes dar, bei dem das Verhältnis der Breite des Hohlraumes zu dessen Flächeninhalt im Drahtquerschnitt 0,026 beträgt, das Verhältnis des Flächeninhaltes des Hohlraumes zum Flächeninhalt des Drahtes in dessen Querschnitt gleich 0,14 ist und der Anteil des Flächeninhaltes des Hohlraumes im Querschnitt, welcher Anteil in einem Abstand bis zu 0,3 des Durchmessers von der Drahtoberfläche 59 liegt, 1 beträgt. Der metallische Träger des Drahtes besteht aus einem Stahl, der Desoxydationsmittel (Silizium, Mangan) enthält, während das Gemenge eine stabilisierende Komponente (Natriumkarbonat) und schlackenbildende Komponenten (Marmor,

00301095

Rutil, Kryolith, Fluorit) enthält.

Die Elektrodendrähte, deren Querschnitt in den Figuren 1, 2, 5, 6, 11 gezeigt ist, sind bevorzugt zur Schweißung mit zusätzlichem Gasschutz mit Argon, Helium, Kohlendioxid oder deren Gemischen, darunter auch mit Sauerstoffzusätzen, anzuwenden, während die Drähte, deren Querschnitt in den Figuren 3, 4, 7, 8, 9, 10 gezeigt ist, zur Schweißung ohne zusätzlichen Schutz effektiv anzuwenden sind.

## Gewerbliche Verwertbarkeit

Die Erfindung ist mit bestem Erfolg zur Lichtbogenschweissung mittels verzehrbarer Elektrode in Schutzgasen oder ohne zusätzlichen Schutz bei der Herstellung von Metallkonstruktionen aus niedriggekohlten und niedriglegierten Stählen anzuwenden.

Außerdem kann die Erfindung beim Auftragschweißen sowie als Zusatzwerkstoff bei der Schweißung mittels unverzehrbarer Elektrode (Wolframelektrode) und bei der Lötung angewendet werden.

- 17 -                    00301095

PATENTANSPRÜCHE

1. Elektrodendraht, in dessen metallischem Träger (1,5,9,14,19,23,27,31,38,44,48,55) zumindest ein längsverlaufender Hohlraum (3,7,11,12,16,17,21,25,29,33,34,35, 36,40,41,42,46,50,51,52,53,57,58) ausgeführt ist, der mit einem Gemenge (2,6,10,15,20,24,28,32,39,45,49,56) ausgefüllt ist und im Querschnitt eine gedehnte Konfiguration aufweist, dadurch g e k e n n z e i c h n e t, daß der längsverlaufende Hohlraum (3, 7, 11, 12, 16, 17, 21, 25, 29, 33, 34, 35, 36, 40, 41, 42, 46, 50, 51, 52, 53, 57, 58) in seinem Querschnitt eine schlitzartige Form hat, wobei das Verhältnis der Breite des Querschnitts zum Flächeninhalt desselben in den Grenzen im wesentlichen zwischen 0,005 und 0,5 liegt, während das Verhältnis der Querschnittsfläche des Hohlraumes (3, 7, 11, 12, 16, 17, 21, 25, 29, 33, 34, 35, 36, 40, 41, 42, 46, 50, 51, 52, 53, 57, 58) zur Querschnittsfläche des Drahtes in den Grenzen im wesentlichen zwischen 0,05 bis 0,5 liegt.

2. Elektrodendraht nach Anspruch 1, dadurch g e k e n n z e i c h n e t, daß der längsverlaufende Hohlraum (3, 7, 11, 12, 16, 17, 21, 25, 29, 33, 34, 35, 36, 40, 41, 42, 46, 50, 51, 52, 53, 57, 58) im Draht so gelegen ist, daß von 0,3 bis 1 der Querschnittsfläche dieses Hohlraumes sich in einem Abstand von nicht größer als 0,3 des Durchmessers des Drahtes von dessen Oberfläche (4, 8, 13, 18, 22, 26, 30, 37, 43, 47, 54, 59) befindet.

3. Elektrodendraht nach Ansprüchen 1 und 2, dadurch g e k e n n z e i c h n e t, daß die Querschnittsbreite des Hohlraumes (3, 7, 11, 12, 16, 17, 21, 25, 29, 33, 34, 35, 36, 40, 41, 42, 50, 51, 52, 53, 57, 58) eine veränderliche Größe ist.

FIG.1

FIG.2

FIG.3

FIG.4

2/3

FIG.5

FIG.6

FIG. 7

FIG.8

FIG.9

FIG.10

FIG.11

FIG.12

# INTERNATIONAL SEARCH REPORT
# 00301095

International Application No **PCT/SU87/00079**

## I. CLASSIFICATION OF SUBJECT MATTER (if several classification symbols apply, indicate all)

According to International Patent Classification (IPC) or to both National Classification and IPC

$IPC^4$ - B 23 K 35/02, 35/06

## II. FIELDS SEARCHED

### Minimum Documentation Searched

| Classification System | Classification Symbols |
|---|---|
| $IPC^4$ | B 23 K 35/00,35/02,35/04,35/06,35/08 |

Documentation Searched other than Minimum Documentation
to the Extent that such Documents are included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU,A1,252518(V.G.Pakhomov et al.), 09 November 1970(09.11.70),see the drawing -- | 1 |
| A | SU,A1,517441(Ordena Lenina i ordena Trudo-vago Krasnogo Znameni institut elektros-varki im.E.O.Patona)21 July 1976(21.07 1976) -- | 1 |
| A | SU,A1,916191(Ordena Lenina i ordena Trudo-vogo Krasnogo Znameni institut elektros-varki im.E.O.Patona)30 March 1982(30.03 82),see figures 1-4 -- | 1 |
| A | FR,A1,2349392(COMPAGNIE DES METAUX PRECI-EUX)25 November 1977(25.11.77),see figure 2 ------- | 1 |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 20 October 1987(20.10.87) | 30 November 1987(30.11.87) |

| International Searching Authority | Signature of Authorized Officer |
|---|---|
| ISA/SU | |

Form PCT/ISA/210 (second sheet) (January 1985)